# EUROPEAN PATENT APPLICATION

(11) **EP 4 560 820 A2**
(43) Date of publication of application: **28.05.2025**
(21) Application number: 24219408.2
(22) Date of filing: 23.11.2022
(51) Int. Cl.: H01M 50/491

(54) **ELECTROCHEMICAL CELL WITH INCREASED RUNTIME AND REDUCED INTERNAL SHORTING**

(30) Priority: 24.11.2021 US 202163282971 P
(62) Divisional of application: 22836020.2
(71) Applicant: Energizer Brands, LLC, St. Louis, MO 63141 (US)
(72) Inventor: Johnson, Robert P., St. Louis, Missouri 63141 (US); Liu, Zhufang, St. Louis, Missouri 63141 (US); Wendling, Matthew T., St. Louis, Missouri 63141 (US); Hennek, Matthew, St. Louis, Missouri 63141 (US); Fan, Daniel, St. Louis, Missouri 63141 (US); Zheng, Guangdong, St. Louis, Missouri 63141 (US)
(74) Representative: Marks & Clerk LLP

(57) **Abstract**

Alkaline electrochemical cells are provided, wherein methods to decrease or eliminate shorting in batteries by preventing zinc oxide reaction precipitate from creating a conductive bridge between the two electrodes. The alkaline electrochemical cell comprising dissolved zinc oxide or zinc hydroxide in at least the electrolyte solution, and/or solid zinc oxide particles or zinc hydroxide in the anode, a silicon donor in the anode, and/or a bilayer separator optimally comprising a high-density layer and a low-density layer.

## Description

### CROSS-REFERENCE TO RELATED APPLICATIONS

This application claims the benefit of U.S. Provisional Application No. 63/282,971, filed November 24, 2021, the contents of which are hereby incorporated by reference in their entirety.

### BACKGROUND

Alkaline electrochemical cells are commercially available in cell sizes commonly known as LR6 (AA), LR03 (AAA), LR14 (C) and LR20 (D). The cells have a cylindrical shape that must comply with the dimensional standards that are set by organizations such as the International Electrotechnical Commission. The electrochemical cells are utilized by consumers to power a wide range of electrical devices, for example, clocks, radios, toys, electronic games, film cameras generally including a flashbulb unit, as well as digital cameras. Such electrical devices create a wide range of electrical discharge conditions, such as from low drain to relatively high drain discharge conditions. Due to the increased use of high drain devices, such as digital cameras, a need constantly exists for batteries having desirable high drain discharge properties.

As the shape and size of the batteries are often fixed, battery manufacturers must modify cell characteristics to provide increased performance. Attempts to address the problem of how to improve a battery's performance in a particular device, such as a digital camera, have usually involved changes to the cell's internal construction and/or chemistry. For example, cell construction and chemistry has been modified by increasing the quantity of active materials utilized within the cell.

Zinc (Zn) is a well-known substance commonly used in electrochemical cells as an active anode material. During discharge of electrochemical cells, the zinc is oxidized to form zinc oxide (ZnO). This zinc oxide reaction product forms a passivation layer, which can inhibit the efficient discharge of the remaining zinc, decreasing battery performance. It is believed that shorting in cells may also result from crystalline zinc oxide forming near the separator and creating a bridge between the cathode and the anode through the separator.

The described claims and embodiments are directed to reduction and termination of shorting in the alkaline cells containing zinc oxide or zinc hydroxide.

### BRIEF SUMMARY

An alkaline electrochemical cell with both solid and dissolved zinc oxide or zinc hydroxide that has increased efficiency over the prior art resulting in increased runtime due to mechanisms within to decrease or eliminate shorting.

An embodiment is an alkaline electrochemical cell, comprising:
a) a container; and
b) an electrode assembly disposed within the container and comprising a cathode, an anode, a separator located between the cathode and the anode, and an electrolyte shot solution;

wherein the anode comprises 1) solid zinc, 2) anolyte, 3) solid zinc oxide particles, solid zinc hydroxide particles, zinc oxide dissolved in said anolyte, or zinc hydroxide dissolved in said anolyte, and 4) a silicon donor; and
wherein the silicon donor is present in an amount of at least 0.036 weight percent of the alkaline electrochemical cell's full cell electrolyte solution.

An embodiment is an alkaline electrochemical cell, comprising:
a) a container; and
b) an electrode assembly disposed within the container and comprising a cathode, an anode, a separator located between the cathode and the anode, and an electrolyte shot solution;

wherein the anode comprises 1) solid zinc, 2) anolyte, and 3) solid zinc oxide particles, solid zinc hydroxide particles, zinc oxide dissolved in said anolyte, or zinc hydroxide dissolved in said anolyte; and
wherein the alkaline electrochemical cell comprises a total zinc oxide weight of at least 3.0 weight percent; and
wherein the separator is a bilayer type separator, or a low-porosity separator, or a laminated separator with a cellophane layer.

### BRIEF SUMMARY OF THE DRAWINGS

Figure 1 is a cross-sectional elevational view of an alkaline electrochemical cell of an embodiment.
Figure 2 demonstrates the effect of shorting on otherwise identical cells in a voltage vs. time plot.
Figure 3A shows the effect on LR6 DSC (ANSI Standard Digital Still Camera Test) performance of full cell electrolyte solution ZnO weight percent in minutes where there are 2 pulses (ANSI/IEC unit) per minute. Figure 3B shows the effect on 50 mA runtime performance of full cell electrolyte solution ZnO weight percent.
Figure 4A shows the effect on cell runtime of increasing the amount of the silicon donor and therefore the ratio of silicate ions to zinc oxide. Figure 4B shows the effect of full cell electrolyte solution silica weight percent on 50 mA 5 min/20 min runtime.
Figures 5A and 5B show the effect of increased sodium silicate concentration on runtime in cells comprising different separator types, relative to the anode solution and the full cell electrolyte solution, respectively.

### DETAILED DESCRIPTION AND DISCUSSION

Various embodiments now will be described more fully hereinafter with reference to the accompanying drawings, in which some, but not all embodiments are shown. Indeed, various embodiments may be embodied in many different forms and should not be construed as limited to the embodiments set forth herein; rather, these embodiments are provided so that this disclosure will satisfy applicable legal requirements. Like numbers refer to like elements throughout. In the following description, various components may be identified as having specific values or parameters; however, these items are provided as exemplary embodiments. Indeed, the exemplary embodiments do not limit the various aspects and concepts of the embodiments as many comparable parameters, sizes, ranges, and/or values may be implemented. The terms "first," "second," and the like, as well as "exemplary" and the like, do not denote any order, quantity, or importance, but rather are used to distinguish one element from another. Further, the terms "a," "an," and "the" do not denote a limitation of quantity, but rather denote the presence of "at least one" of the referenced item.

Each embodiment disclosed herein is contemplated as being applicable to each of the other disclosed embodiments. All combinations and sub-combinations of the various elements described herein are within the scope of the embodiments.

It is understood that where a parameter range is provided, all integers and ranges within that range, and tenths and hundredths thereof, are also provided by the embodiments. For example, "5-10%" includes 5%, 6%, 7%, 8%, 9%, and 10%; 5.0%, 5.1%, 5.2%....9.8%, 9.9%, and 10.0%; and 5.00%, 5.01%, 5.02%....9.98%, 9.99%, and 10.00%, as well as, for example, 6-9%, 5.1%-9.9%, and 5.01%-9.99%.

As used herein, "about" in the context of a numerical value or range means within ±10% of the numerical value or range recited or claimed.

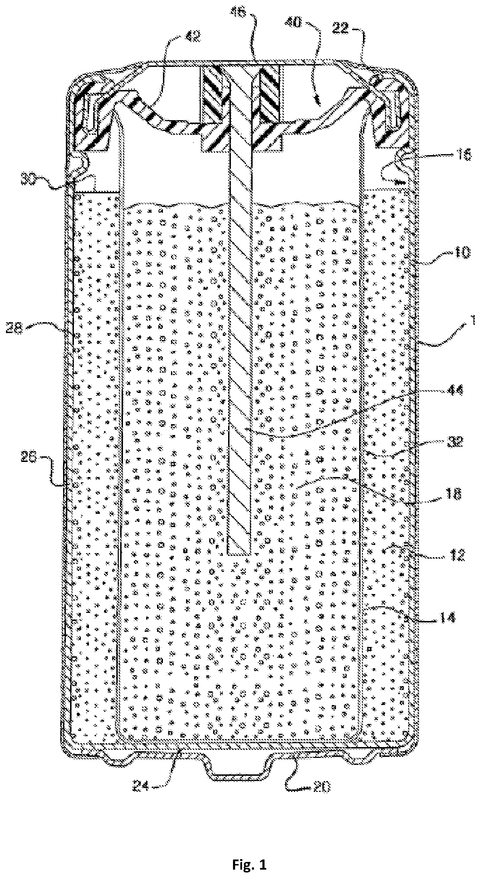

As used herein, "full cell weight" refers to the weight of the internal elements of the cell such as the anode (first electrode **18**), cathode (second electrode **12**), electrolyte shot solution, and any additives. This does not include the container or can **10,** closed bottom end **24,** top end **22,** sidewall **26,** terminal cover **20,** inner wall **16,** bottom end **24,** label **28,** negative terminal cover **46,** closure assembly **40,** closure member **42,** current collector **44,** separator **14,** or conductive terminal **46,** as shown in **Figure 1****,** and described in more detail hereinbelow.

As used herein, "full cell electrolyte mass" refers to the total mass of alkaline metal hydroxide (e.g., KOH) in the cell, and "full cell electrolyte concentration" refers to the total concentration of the alkaline metal hydroxide in the cell. The full cell electrolyte concentration can be found according to the calculation (full cell electrolyte mass)/(full cell mass of electrolyte solution) multiplied by 100 if it is to be conveyed as a percentage. The full cell mass of the electrolyte solution is calculated as: (full cell electrolyte mass) + (full cell mass of aqueous solvent) + (mass of additive in the solution). The total additive weight percent in the full cell electrolyte solution can be determined via the calculation (total mass of additive in cell)/(full cell mass of electrolyte solution) X 100.

As used herein, the "total weight percent" of a compound in a cell, or portion thereof, refers to the total weight of the compound, compared to the total mass or weight of the other materials within the cell or the relevant portion, which can include but is not limited to: the zinc compound (e.g., zinc oxide or zinc hydroxide), electrolyte, water, separator, active material, and additives. For example, "total zinc oxide weight percent of a cell" is calculated as (zinc oxide mass)/(full cell weight) X 100% wherein the "full cell weight" is as described above. The weight percent of the compound with respect to any portion of the cell (e.g. the anode) may be similarly calculated by only using the sum of the materials comprising that portion of the cell in the calculation. The water may be from any source within the cell. Concentrations and amounts of all cell components and additives may be determined by any method known in the art. Non-limiting examples of such methods are described in U.S. Patent No. 8,318,350, the contents of which are incorporated by reference herein in their entirety
"Total dissolved zinc oxide weight percent" in the full-cell electrolyte is calculated as (dissolved zinc oxide mass in cell)/(dissolved zinc oxide mass in cell + electrolyte mass in cell + water mass in cell) X 100%. This measurement does not account for the mass of solid (i.e., undissolved) zinc oxide in the anode. The same formula, *mutatis mutandis,* can be used to calculate total dissolved zinc hydroxide weight percent.

As used herein, the "electrolyte concentration percent" in an electrode refers to the total weight of the electrolyte in the electrode, compared to the total weight of the electrolyte and the water in the electrode. For example the "KOH weight percent" of an electrode is calculated as (KOH mass in electrode)/(KOH mass in electrode + water mass in electrode) X 100%.

As used herein, "improvement" with respect to specific capacity means that the specific capacity is increased. Generally, an "improvement" of a property or metric of performance of a material or electrochemical cell means that the property or metric of performance differs (compared to that of a different material or electrochemical cell) in a manner that a user or manufacturer of the material or cell would find desirable (*i.e.* costs less, lasts longer, provides more power, more durable, easier or faster to manufacture, etc.).

As used herein, "discharge capacity" refers to the total amount of charge from an electrochemical cell when discharged at a particular rate. This is typically measured in ampere hours.

As used herein, "runtime" refers to the length of time that an electrochemical cell will be able to support a current drain before the closed circuit voltage drops below a functional end point.

As used herein, describing a solution as "X% saturated" with a solute means that the solution comprises as a solute X% of the maximum amount of the solute that could be dissolved in the solution at the same temperature, pressure, etc., accounting for all other components of the solution (such as, for example, dissolved electrolyte). Saturation values contained herein were calculated according to the methods of Cheh et al. (J. Electrochem. Soc., Vol. 141, No. 1, Modeling of Cylindrical Alkaline Cells (Jan. 1994)). To encourage dissolution of zinc oxide or zinc hydroxide, a stir bar may be used to mix zinc oxide or zinc hydroxide particles into a potassium hydroxide solution at or above 45°C. In certain embodiments, a solution may be more than 100% saturated (i.e., supersaturated).

As used herein, the term "electrolyte shot" refers to a liquid electrolyte solution that is added to the cell. This electrolyte shot is largely absorbed into the separator and cathode. Further, the term "free electrolyte" refers to the electrolyte-solution that is not absorbed by the anode, cathode, separator, or any other part of the battery. The free electrolyte remains in liquid form in the battery during manufacturing.

As used herein, "anolyte" refers to a first aqueous alkaline electrolyte solution, which forms part of an anode. In certain embodiment, the anolyte is combined with a gelling agent to form a gelled anode. The anolyte comprises an alkaline metal hydroxide electrolyte and dissolved zinc oxide or zinc hydroxide. The anolyte may additionally comprise additives such as a silicon donor and/or a surfactant.

As used herein, "catholyte" refers to a second aqueous alkaline electrolyte solution, which forms part of a cathode. The catholyte comprises an alkaline metal hydroxide electrolyte. The catholyte may additionally comprise additives such as a silicon donor, dissolved zinc oxide or zinc hydroxide, and/or a surfactant.

Describing an electrochemical cell as having "X% total cell saturation" of a compound accounts for both the compound dissolved in the electrolyte shot solution as well as the presence of that compound in the electrodes. For example, in calculating the total cell saturation of zinc oxide of an electrochemical cell, the amount of zinc oxide dissolved in the electrolyte shot solution would need to be determined, along with solid and dissolved zinc oxide in the anode. This may result in a total cell saturation percentage over 100%.

As used herein, a "source of zincate ions" refers to any compound which produces zincate ions (Zn(OH)₄²⁻) when dissolved. Non-limiting examples include zinc oxide (ZnO), and zinc hydroxide (Zn(OH)₂). In an embodiment, the term may refer to only zinc oxide and zinc hydroxide. As used herein, "zinc oxide equivalent" refers to an amount of a source of zincate ions (such as zinc oxide or zinc hydroxide) that provides an equivalent number of Zn²⁺ moles as that amount of zinc oxide. For example, 0.0994 g (0.001 moles) of Zn(OH)₂ would be the equivalent of 0.0814 g (0.001 moles) of ZnO.

As used herein, the term "silicon donor" refers not only to elemental silicon but also to any additive containing silicon. Examples include, but are in no way limited to, sodium silicate, silicon dioxide ((SiO₂, also known as silica), and potassium silicate.

As used herein, "silicate" refers to any silicate anion, meaning any anion consisting of silicon and oxygen that can be formed as a result of the addition of a silicon donor to the cell.

As used herein, "solid zinc oxide" refers to solid zinc oxide particles added to the cell and/or the physical properties of such particles. "Solid zinc hydroxide" refers to solid zinc hydroxide particles added to the cell and/or the physical properties of such particles
The cell embodiments described herein are directed to the cell as it is built. The concentration of many of the materials within the cell can fluctuate with use and these changes are often inconsistent. Further, even in unused batteries, these concentrations can vary slightly due to equilibration with time.

An embodiment is an alkaline electrochemical cell, comprising:
a) a container; and
b) an electrode assembly disposed within the container and comprising a cathode, an anode, a separator located between the cathode and the anode, and an electrolyte solution;
wherein the anode comprises 1) solid zinc 2) solid zinc oxide particles or solid zinc hydroxide particles 3) a silicon donor; and
wherein the electrolyte solution comprises dissolved zinc oxide or dissolved zinc hydroxide.

Another embodiment is an alkaline electrochemical cell, comprising:
a) a container; and
b) an electrode assembly disposed within the container and comprising a cathode, an anode, a separator located between the cathode and the anode, and an electrolyte solution;

wherein the anode comprises 1) solid zinc and 2) solid zinc oxide particles or solid zinc hydroxide,
wherein the cathode comprises a silicon dioxide, and
wherein the electrolyte solution comprises dissolved zinc oxide or dissolved zinc hydroxide.

An embodiment is an alkaline electrochemical cell, comprising:
a) a container; and
b) an electrode assembly disposed within the container and comprising a cathode, an anode, a separator located between the cathode and the anode, and an electrolyte solution;

wherein the anode comprises 1) solid zinc and 2) solid zinc oxide particles or solid zinc hydroxide; and
wherein the electrolyte solution comprises dissolved zinc oxide or dissolved zinc hydroxide; and
wherein the separator is a bilayer separator.

An embodiment is an alkaline electrochemical cell, comprising:
a) a container; and
b) an electrode assembly disposed within the container and comprising a cathode, an anode, a separator located between the cathode and the anode, and an electrolyte shot solution;

wherein the anode comprises 1) solid zinc, 2) anolyte, 3) solid zinc oxide particles, solid zinc hydroxide particles, zinc oxide dissolved in said anolyte, or zinc hydroxide dissolved in said anolyte, and 4) a silicon donor; and
wherein the silicon donor is present in an amount of at least 0.036 weight percent of the alkaline electrochemical cell's full cell electrolyte solution.

An embodiment is an alkaline electrochemical cell, comprising:
a) a container; and
b) an electrode assembly disposed within the container and comprising a cathode, an anode, a separator located between the cathode and the anode, and an electrolyte shot solution;

wherein the anode comprises 1) solid zinc, 2) anolyte, and 3) solid zinc oxide particles, solid zinc hydroxide particles, zinc oxide dissolved in said anolyte, or zinc hydroxide dissolved in said anolyte; and
wherein the alkaline electrochemical cell comprises a total zinc oxide weight of at least 3.0 weight percent; and
wherein the separator is a bilayer type separator, or a low-porosity separator, or a laminated separator with a cellophane layer.

In an embodiment, the separator is a bilayer with a high-density layer and a low-density layer. In an embodiment, the high-density layer has a higher density than the low-density layer. In an embodiment, the high-density layer has a density between 0.5 and 0.8 grams per cubic centimeter, a thickness of 25-50 microns, and a mean pore size less than 1.5 microns and preferably less than 1.0 microns. In an embodiment, the low-density layer has a density between 0.2 and 0.5 grams per cubic centimeter and thickness of 25-75 microns.

In an embodiment, the anode comprises solid zinc oxide particles and the electrolyte shot solution comprises dissolved zinc oxide.

In an embodiment, the electrolyte shot solution comprises dissolved zinc oxide equivalent in an amount of greater than 0.1 weight percent. In an embodiment, the electrolyte shot solution comprises dissolved zinc oxide equivalent in an amount of greater than 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, or 14.0 weight percent. In an embodiment, the electrolyte shot solution comprises dissolved zinc oxide equivalent in an amount of less than 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, or 14.0 weight percent. In an embodiment, the electrolyte shot solution comprises dissolved zinc oxide equivalent in an amount of equal to about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, or 14.0 weight percent. In an embodiment, the electrolyte shot solution comprises dissolved zinc oxide equivalent in an amount of greater than 2.0 weight percent. In a further embodiment, the electrolyte shot solution comprises dissolved zinc oxide equivalent in an amount of about 4.0-6.5 weight percent.

In an embodiment, the anode comprises a gelled electrolyte, wherein the gelled electrolyte is prepared by combining a gelling agent with a first aqueous alkaline electrolyte solution (or "anolyte"), wherein the first aqueous alkaline electrolyte solution comprises an alkaline metal hydroxide electrolyte and dissolved zinc oxide or zinc hydroxide. In an embodiment, the first aqueous alkaline electrolyte solution comprises dissolved zinc oxide equivalent in an amount of greater than 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, or 14.0 weight percent. In an embodiment, the first aqueous alkaline electrolyte solution comprises dissolved zinc oxide equivalent in an amount of less than 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, or 14.0 weight percent. In an embodiment, the first aqueous alkaline electrolyte solution comprises dissolved zinc oxide equivalent in an amount of equal to about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, or 14.0 weight percent. In a further embodiment, the first aqueous alkaline electrolyte solution comprises dissolved zinc oxide equivalent in an amount of ≥ 2.5, ≥ 2.6, ≥ 2.7, ≥ 2.8, ≥ 2.9, ≥ 3.0, ≥ 3.1, ≥ 3.2, ≥ 3.3, ≥ 3.4, ≥ 3.5, ≥ 3.6, ≥ 3.7, ≥ 3.8, ≥ 3.9, or ≥ 4.0 weight percent. In an embodiment, the first aqueous alkaline electrolyte solution comprises dissolved zinc oxide equivalent in an amount of about 2.7-3.3 weight percent.

In an embodiment, the first aqueous alkaline electrolyte solution is at least 5% saturated with zinc oxide or zinc hydroxide. In an embodiment, the negative electrode electrolyte solution is at least 100% saturated with zinc oxide or zinc hydroxide. In an embodiment, the negative electrode electrolyte solution is from 5-100% saturated with zinc oxide or zinc hydroxide. In an embodiment, the negative electrode electrolyte solution is greater than, less than, or equal to about 5%, 10%, 15%, 20%, 25%, 30%, 35%, 40%, 45%, 50%, 55%, 60%, 65%, 70%, 75%, 80%, 85%, 90%, 95%, or 100% saturated with zinc oxide or zinc hydroxide, or a range between any two of these numbers.

In an embodiment, the cathode comprises a second aqueous alkaline electrolyte solution (or "catholyte"), wherein the second aqueous alkaline electrolyte solution comprises an alkaline metal hydroxide electrolyte and dissolved zinc oxide or zinc hydroxide. In an embodiment, the second aqueous alkaline electrolyte solution comprises dissolved zinc oxide equivalent in an amount of greater than 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, or 14.0 weight percent. In an embodiment, the second aqueous alkaline electrolyte solution comprises dissolved zinc oxide equivalent in an amount of less than 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, or 14.0 weight percent. In an embodiment, the second aqueous alkaline electrolyte solution comprises dissolved zinc oxide equivalent in an amount of equal to about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, or 14.0 weight percent. In a further embodiment, the second aqueous alkaline electrolyte solution comprises dissolved zinc oxide equivalent in an amount of ≥ 2.5, ≥ 2.6, ≥ 2.7, ≥ 2.8, ≥ 2.9, ≥ 3.0, ≥ 3.1, ≥ 3.2, ≥ 3.3, ≥ 3.4, ≥ 3.5, ≥ 3.6, ≥ 3.7, ≥ 3.8, ≥ 3.9, or ≥ 4.0 weight percent. In a further embodiment, the second aqueous alkaline electrolyte solution comprises dissolved zinc oxide equivalent in an amount of about 2.5-4.0 weight percent, or about 2.7-3.3 weight percent.

In an embodiment, the first aqueous alkaline electrolyte solution and the second aqueous alkaline electrolyte solution are identical.

In an embodiment, the total dissolved zinc oxide equivalent weight percent in the electrochemical cell's full cell electrolyte solution is greater than 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, or 14.0 weight percent. In an embodiment, the total dissolved zinc oxide equivalent weight percent in the electrochemical cell's full cell electrolyte solution is less than 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, or 14.0 weight percent. In an embodiment, the total dissolved zinc oxide equivalent weight percent in the electrochemical cell's full cell electrolyte solution is equal to about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, or 14.0 weight percent. In an embodiment, the total dissolved zinc oxide equivalent weight percent in the electrochemical cell's full cell electrolyte solution is about 1.5-4.5 weight percent.

In an embodiment, the total zinc oxide equivalent weight percent in the electrochemical cell's full cell electrolyte solution is greater than 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, 14.0, 14.1, 14.2, 14.3, 14.4, 14.5, 14.6, 14.7, 14.8, 14.9, 15.0, 15.1, 15.2, 15.3, 15.4, 15.5, 15.6, 15.7, 15.8, 15.9, or 16.0 weight percent. In an embodiment, the total zinc oxide equivalent weight percent in the electrochemical cell's full cell electrolyte solution is less than 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, 14.0, 14.1, 14.2, 14.3, 14.4, 14.5, 14.6, 14.7, 14.8, 14.9, 15.0, 15.1, 15.2, 15.3, 15.4, 15.5, 15.6, 15.7, 15.8, 15.9, or 16.0 weight percent. In an embodiment, the total zinc oxide equivalent weight percent in the electrochemical cell's full cell electrolyte solution is equal to about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, 14.0, 14.1, 14.2, 14.3, 14.4, 14.5, 14.6, 14.7, 14.8, 14.9, 15.0, 15.1, 15.2, 15.3, 15.4, 15.5, 15.6, 15.7, 15.8, 15.9, or 16.0 weight percent. In an embodiment, the total zinc oxide equivalent weight percent in the electrochemical cell's full cell electrolyte solution is about 2.0-4.0 or about 2.5-3.5 weight percent. In an embodiment, the total zinc oxide equivalent weight percent in the electrochemical cell's full cell electrolyte solution is greater than about 4.5 weight percent. In an embodiment, the total zinc oxide equivalent weight percent in the electrochemical cell's full cell electrolyte solution is about 0.5-4.5 weight percent, or about 0.5-3.0 weight percent, or about 0.5-2.0 weight percent.

In an embodiment, the electrochemical cell's full cell electrolyte is greater than 5%, 10%, 15%, 20%, 25%, 30%, 35%, 40%, 55%, 50%, 65%, 70%, 75%, 80%, 85%, 90%, 95%, 100%, 105%, 110%, 115%, 120%, or 125% saturated with dissolved zinc oxide equivalent. In an embodiment, the electrochemical cell's full cell electrolyte is greater than 40% saturated with dissolved zinc oxide equivalent.

In an embodiment, the solid zinc oxide particles or solid zinc hydroxide particles are a substituted solid zinc oxide or substituted solid zinc hydroxide, and comprises a cation substituent or an anion substituent, wherein the substituted solid zinc oxide or substituted solid zinc hydroxide is less soluble than unsubstituted solid zinc oxide or substituted solid zinc hydroxide.

In an embodiment, the substituted solid zinc oxide has the formula Zn₁₋ₓYₓO, wherein Y is at least one cation substituent, and 0 < x ≤ 0.50.

In an embodiment, the substituted solid zinc hydroxide has the formula Zn₁₋ₓYₓ(OH)₂, wherein Y is at least one cation substituent, and 0 < x ≤ 0.50.

In an embodiment, the substituted solid zinc oxide has the formula ZnO_{1-w}A_{(2w/z)}, wherein A is at least one anion substituent, 0 < w ≤ 0.50, and z is the charge of the anion substituent.

In an embodiment, the substituted solid zinc hydroxide has the formula Zn(OH)_{2-w}A_{(w/z)}, wherein A is at least one anion substituent, 0 < w ≤ 0.50, and z is the charge of the anion substituent.

In an embodiment, the substituted solid zinc oxide has the formula Zn₁₋ₓYₓO_{1-w}(OH)_{2w}, wherein Y is at least one cation substituent, wherein 0 < x ≤ 0.50, and wherein 0 < w ≤ 0.50.

In an embodiment, the substituted solid zinc oxide is a cation-substituted and anion-substituted mixed oxide hydroxide. In a further embodiment, the cation-substituted and anion-substituted mixed oxide hydroxide has the formula Zn₁₋ₓYₓO_{1-w-t}(OH)_{2w}A_{(2t/z)}, wherein Y is at least one cation substituent, wherein 0 < x ≤ 0.50, wherein A is at least one anion substituent, 0 < w ≤ 0.50, 0 < t ≤ 0.50, and z is the charge of the anion substituent.

In an embodiment, the cation substituent is selected from the group consisting of Ca, Bi, Ba, Al, Mg, Si, Be, and Sr, and any combination thereof.

In an embodiment, the anion substituent is selected from the group consisting of S²⁻, CO₃²⁻, and PO₄³⁻, and any combination thereof. In an embodiment, the anion substituent is selected from the group consisting of S ²⁻, CO₃²⁻ and PO₄³⁻, and a combination thereof.

In an embodiment, the anode comprises solid zinc oxide equivalent particles in an amount of less than about 5 volume percent, based on the total volume of the anode. In an embodiment, the anode comprises solid zinc oxide equivalent particles in an amount of greater than 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0 volume percent, based on the total volume of the anode. In an embodiment, the anode comprises solid zinc oxide equivalent particles in an amount of less than 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0 volume percent, based on the total volume of the anode. In an embodiment, the anode comprises solid zinc oxide equivalent particles in an amount of equal to about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0 volume percent, based on the total volume of the anode. In an embodiment, the anode comprises solid zinc oxide equivalent particles in an amount of about 0.2 to 5 volume percent, based on the total volume of the anode. In an embodiment, the anode comprises solid zinc oxide equivalent particles in an amount of about 0.1 to 1.5 volume percent, based on the total volume of the anode. In an embodiment, the anode comprises solid zinc oxide equivalent particles in an amount of about 0.66 volume percent, based on the total volume of the anode.

In an embodiment, the anode comprises a silicon donor in an amount of about 0.1, 0.2, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, or 4.0 weight percent, based on total weight of the anode. In an embodiment, the anode comprises a silicon donor in an amount of 0.1-4.0, 0.5-3.5, 1.0-3.0, 1.4-2.6, or 1.8-2.2 weight percent, based on total weight of the anode. In an embodiment, the anode comprises sodium silicate in an amount of about 0.1 to 4 weight percent, based on total weight of the anode.

In an embodiment, the anolyte comprises a silicon donor in an amount of about 0.1, 0.2, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, or 4.0 weight percent. In an embodiment, the anolyte comprises a silicon donor in an amount of 0.1-4.0, 0.5-3.5, 1.0-3.0, 1.4-2.6, or 1.8-2.2 weight percent, based on total weight of the anolyte. In an embodiment, the anolyte comprises sodium silicate in an amount of about 0.1 to 4 weight percent, based on total weight of the anolyte.

In an embodiment, the alkaline electrochemical cell comprises a total zinc oxide equivalent weight percent of about 1.0-12.5%. In an embodiment, the alkaline electrochemical cell comprises a total zinc oxide weight percent of greater than 0.1 weight percent. In an embodiment, the alkaline electrochemical cell comprises a total zinc oxide equivalent weight percent of greater than 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0 weight percent. In an embodiment, the alkaline electrochemical cell comprises a total zinc oxide equivalent weight percent of less than 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0 weight percent. In an embodiment, the alkaline electrochemical cell comprises a total zinc oxide equivalent weight percent of equal to about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0 weight percent. In an embodiment, the alkaline electrochemical cell comprises a total zinc oxide equivalent weight percent of about 3.0-8.8%. In an embodiment, the alkaline electrochemical cell comprises a total zinc oxide equivalent weight percent of about 0.5-3.0%, 1.0-5.0%, about 3.0-4.0%, about 4.0-5.0%, about 5.0-6.0%, about 6.0-7.0%, about 7.0-8.0%, or about 8.0-9.0%. In an embodiment, the alkaline electrochemical cell comprises a total zinc oxide equivalent weight percent of greater than about 3.0%. In an embodiment, the alkaline electrochemical cell comprises a total zinc oxide equivalent weight percent of greater than, less than, or equal to about 3.5%, 4.0%, 4.5%, 5.0%, 5.5%, 6.0%, 6.5%, 7.0%, 7.5%, 8.0%, 8.5%, 9.0%, 9.5%, 10.0%, 10.5%, 11.0%, 11.5%, or 12.0%. In an embodiment, the alkaline electrochemical cell comprises a total zinc oxide equivalent weight percent of about 4.75%.

In an embodiment, the anode comprises an electrolyte concentration percent of about 1.0-50.0% by weight. In an embodiment, the anode comprises an electrolyte concentration percent of about 20.0-36.0% by weight. In an embodiment, the anode comprises an electrolyte concentration percent of about 14.0-28.0% by weight. In an embodiment, the anode comprises an electrolyte concentration of less than, greater than, or about 16, 17, 18, 19, 20, 21, 22, 23, 24, 25, 26, 27, 28, 29, 30, 31, 32, 33, 34, 35, or 36% by weight.

In an embodiment, the full cell electrolyte concentration, by weight, is about 1.0-50.0%. In an embodiment, the full cell electrolyte concentration, by weight, is about 15.0-40.0%. In an embodiment, the full cell electrolyte concentration is 10-32%. In an embodiment, the full cell electrolyte concentration is less than 30.0%. In an embodiment, the full cell electrolyte concentration is less than, greater than, or about 16, 17, 18, 19, 20, 21, 22, 23, 24, 25, 26, 27, 28, 29, 30, 31, 32, 33, 34, 35, or 36% by weight.

In an embodiment, the total cell saturation of zinc oxide or zinc hydroxide is at least about 5% to at least about 400%. In an embodiment, the total cell saturation of zinc oxide or zinc hydroxide is at least about 5%, 10%, 20%, 30%, 40%, 50%, 60%, 70%, 80%, 90%, 100%, 10%, 20%, 30%, 40%, 50%, 60%, 70%, 80%, 90%, 100%, 110%, 120%, 130%, 140%, 150%, 160%, 170%, 180%, 190%, 200%, 210%, 220%, 230%, 240%, 250%, 260%, 270%, 280%, 290%, 300%, 310%, 320%, 330%, 340%, 350%, 360%, 370%, 380%, 390%, or 400%. In an embodiment, the total cell saturation of zinc oxide or zinc hydroxide is at least about 40%. In an embodiment, the total cell saturation of zinc oxide or zinc hydroxide is at least about 40-125%. In an embodiment, the total cell saturation of zinc oxide or zinc hydroxide is about 40-125%. In an embodiment, the total cell saturation of zinc oxide or zinc hydroxide is at least about 40%, 45%, 50%, 55%, 60%, 70%, 75%, 80%, 85%, 90%, 95%, 100%, 105%, 110%, 115%, 120%, or 125%.

In an embodiment, the electrochemical cell is a primary cell. In an alternate embodiment, the electrochemical cell is a secondary cell.

In an embodiment, the electrolyte solution comprises potassium hydroxide (KOH), sodium hydroxide (NaOH), lithium hydroxide (LiOH), magnesium hydroxide (Mg(OH)₂), calcium hydroxide (Ca(OH)₂), magnesium perchlorate (Mg(ClO₄)₂), magnesium chloride (MgCl₂), or magnesium bromide (MgBr₂).

In an embodiment, the alkaline electrochemical cell has a specific capacity or runtime that is greater than that of a similar alkaline electrochemical cell which lacks the dissolved zinc oxide or zinc hydroxide in the electrolyte solution or anode. In a further embodiment, the specific capacity or runtime is from 1% greater to 200% greater, or from 1% greater to 150% greater, or from 1% greater to 100% greater, or from 5% greater to 90% greater, or from 10% greater to 80% greater, or from 15% greater to 70% greater, or from 20% greater to 60% greater, or from 25% greater to 50% greater, or from 30% greater to 40% greater.

In an embodiment, wherein the cell has a voltage of 0.1 V - 2.0 V, 0.2 V - 1.9 V, 0.3 V - 1.8 V, 0.4 V - 1.7 V, 0.5 V - 1.6 V, 0.6 V - 1.5 V, 0.7 V - 1.4 V, 0.8 V - 1.3 V, 0.9 V - 1.2 V, 1.0 V - 1.1 V, or is 0.1 V, 0.2 V, 0.3 V, 0.4 V, 0.5 V, 0.6 V, 0.7 V, 0.8 V, 0.9 V, 1.0 V, 1.1 V, 1.2 V, 1.3 V, 1.4 V, 1.5 V, 1.6 V, 1.7 V, 1.8 V, 1.9 V, or 2.0 V.

In an embodiment, the absolute weight of sodium silicate in the anode is between 0.005 and 0.03 grams in an LR6 cell.

In an embodiment, silica is added to the cell to provide a source for silicate anions in the solution. This may come from solutions with sodium silicate, potassium silicate, or a solid silicon dioxide silica additive.

In an embodiment, silicon dioxide is added to the cathode.

In an embodiment, the silicon donor is present in an amount of at least 0.036 weight percent of the alkaline electrochemical cell's full cell electrolyte solution. In an embodiment, the silicon donor is present in an amount of at least 1.25 weight percent of the alkaline electrochemical cell's full cell electrolyte solution. In an embodiment, the silicon donor is present in an amount of greater than, less than, or equal to 0.036, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, or 1.25 weight percent of the alkaline electrochemical cell's full cell electrolyte solution, or a range between any two of these values.

In an embodiment, the full cell molarity of dissolved zinc oxide or zinc hydroxide is from about 0.1 to about 1.5. In an embodiment, the full cell molarity of dissolved zinc oxide or zinc hydroxide is greater than, less than, or about 0.1, 0.2, 0.3, 0.4, 0.5, 0.6, 0.7, 0.8, 0.9, 1.0, 1.1, 1.2, 1.3, 1.4, or 1.5, or a range between any two of these values.

In an embodiment, the total cell zinc oxide equivalent weight is from about 0.05 to about 0.7 g. In an embodiment, the total cell zinc oxide equivalent weight is greater than, less than, or about 0.05, 0.06, 0.07, 0.08, 0.09, 0.1, 0.15, 0.2, 0.25, 0.3, 0.35, 0.4, 0.45, 0.5, 0.55, 0.6, 0.65, or 0.7, or a range between any two of these values.

In an embodiment, the total number of Zn²⁺ moles in the cell is from about 0.00061 to about 0.00860. In an embodiment, the total number of Zn²⁺ moles in the cell is greater than, less than, or about 0.00061, 0.001, 0.002, 0.003, 0.004, 0.005, 0.006, 0.007, 0.008, or 0.00860, or a range between any two of these values.

One way of characterizing a cell's charging capacity is to measure the charging capacity, at a given current, to an inflection point, as discussed in U.S. Patent Nos. 5,780,994, which is hereby incorporated by reference in its entirety. Specifically, when a battery is being charged using a constant current, the charge state of the battery can be monitored using a voltage vs. time chart. The voltage will rise at a constant rate, then will rise at a progressively faster rate; however, as the battery reaches full charge, the rate will slow, creating an inflection point (i.e., a peak in the first derivative (dV/dt) of the voltage vs. time chart. Alternatively, the charging capacity may be measured to a specific voltage cutoff. This charging capacity may be used as an indirect method of determining the amount of ZnO in a cell; the voltage rises gradually as ZnO is plated to Zn, and rises sharply once the available ZnO is consumed.

In an embodiment, when charging the cell at 0.5 mA, at 21°C, the cell has a charging capacity to inflection of at least 25 mAh. In an embodiment, when charging the cell at 0.5 mA, at 21°C, the cell has a charging capacity to inflection of at least 500 mAh. In an embodiment, when charging the cell at 0.5 mA, at 21°C, the cell has a charging capacity to inflection of 25-500 mAh.

In an embodiment, when charging the cell at 1 mA, at 21°C, the cell has a charging capacity to inflection of at least 22 mAh. In an embodiment, when charging the cell at 1 mA, at 21°C, the cell has a charging capacity to inflection of at least 500 mAh. In an embodiment, when charging the cell at 1 mA, at 21°C, the cell has a charging capacity to inflection of 22-500 mAh.

In an embodiment, when charging the cell at 5 mA, at 21°C, the cell has a charging capacity to inflection of at least 17 mAh. In an embodiment, when charging the cell at 5 mA, at 21°C, the cell has a charging capacity to inflection of at least 500 mAh. In an embodiment, when charging the cell at 5 mA, at 21°C, the cell has a charging capacity to inflection of 17-500 mAh.

In an embodiment, when charging the cell at 10 mA, at 21°C, the cell has a charging capacity to inflection of at least 14 mAh. In an embodiment, when charging the cell at 10 mA, at 21°C, the cell has a charging capacity to inflection of at least 500 mAh. In an embodiment, when charging the cell at 10 mA, at 21°C, the cell has a charging capacity to inflection of 14-500 mAh.

In an embodiment, when charging the cell at 50 mA, at 21°C, the cell has a charging capacity to inflection of at least 13 mAh. In an embodiment, when charging the cell at 50 mA, at 21°C, the cell has a charging capacity to inflection of at least 500 mAh. In an embodiment, when charging the cell at 50 mA, at 21°C, the cell has a charging capacity to inflection of 13-500 mAh.

In an embodiment, when charging the cell at 100 mA, at 21°C, the cell has a charging capacity to inflection of at least 12 mAh. In an embodiment, when charging the cell at 100 mA, at 21°C, the cell has a charging capacity to inflection of at least 500 mAh. In an embodiment, when charging the cell at 100 mA, at 21°C, the cell has a charging capacity to inflection of 12-500 mAh.

In an embodiment, when charging the cell at 0.5 mA, at 21°C, the cell has a charging capacity to a voltage selected from the group consisting of 1.7, 1.8, 1.9, 2.0, 2.1, and 2.2 V of at least 25 mAh. In an embodiment, when charging the cell at 0.5 mA, at 21°C, the cell has a charging capacity to a voltage selected from the group consisting of 1.7, 1.8, 1.9, 2.0, 2.1, and 2.2 V of at least 500 mAh. In an embodiment, when charging the cell at 0.5 mA, at 21°C, the cell has a charging capacity to a voltage selected from the group consisting of 1.7, 1.8, 1.9, 2.0, 2.1, and 2.2 V of 25-500 mAh.

In an embodiment, when charging the cell at 1 mA, at 21°C, the cell has a charging capacity to a voltage selected from the group consisting of 1.7, 1.8, 1.9, 2.0, 2.1, and 2.2 V of at least 22 mAh. In an embodiment, when charging the cell at 1 mA, at 21°C, the cell has a charging capacity to a voltage selected from the group consisting of 1.7, 1.8, 1.9, 2.0, 2.1, and 2.2 V of at least 500 mAh. In an embodiment, when charging the cell at 1 mA, at 21°C, the cell has a charging capacity to a voltage selected from the group consisting of 1.7, 1.8, 1.9, 2.0, 2.1, and 2.2 V of 22-500 mAh.

In an embodiment, when charging the cell at 5 mA, at 21°C, the cell has a charging capacity to a voltage selected from the group consisting of 1.7, 1.8, 1.9, 2.0, 2.1, and 2.2 V of at least 17 mAh. In an embodiment, when charging the cell at 5 mA, at 21°C, the cell has a charging capacity to a voltage selected from the group consisting of 1.7, 1.8, 1.9, 2.0, 2.1, and 2.2 V of at least 500 mAh. In an embodiment, when charging the cell at 5 mA, at 21°C, the cell has a charging capacity to a voltage selected from the group consisting of 1.7, 1.8, 1.9, 2.0, 2.1, and 2.2 V of 17-500 mAh.

In an embodiment, when charging the cell at 10 mA, at 21°C, the cell has a charging capacity to a voltage selected from the group consisting of 1.7, 1.8, 1.9, 2.0, 2.1, and 2.2 V of at least 14 mAh. In an embodiment, when charging the cell at 10 mA, at 21°C, the cell has a charging capacity to a voltage selected from the group consisting of 1.7, 1.8, 1.9, 2.0, 2.1, and 2.2 V of at least 500 mAh. In an embodiment, when charging the cell at 10 mA, at 21°C, the cell has a charging capacity to a voltage selected from the group consisting of 1.7, 1.8, 1.9, 2.0, 2.1, and 2.2 V of 14-500 mAh.

In an embodiment, when charging the cell at 50 mA, at 21°C, the cell has a charging capacity to a voltage selected from the group consisting of 1.7, 1.8, 1.9, 2.0, 2.1, and 2.2 V of at least 13 mAh. In an embodiment, when charging the cell at 50 mA, at 21°C, the cell has a charging capacity to a voltage selected from the group consisting of 1.7, 1.8, 1.9, 2.0, 2.1, and 2.2 V of at least 500 mAh. In an embodiment, when charging the cell at 50 mA, at 21°C, the cell has a charging capacity to a voltage selected from the group consisting of 1.7, 1.8, 1.9, 2.0, 2.1, and 2.2 V of 13-500 mAh.

In an embodiment, when charging the cell at 100 mA, at 21°C, the cell has a charging capacity to a voltage selected from the group consisting of 1.7, 1.8, 1.9, 2.0, 2.1, and 2.2 V of at least 12 mAh. In an embodiment, when charging the cell at 100 mA, at 21°C, the cell has a charging capacity to a voltage selected from the group consisting of 1.7, 1.8, 1.9, 2.0, 2.1, and 2.2 V of at least 500 mAh. In an embodiment, when charging the cell at 100 mA, at 21°C, the cell has a charging capacity to a voltage selected from the group consisting of 1.7, 1.8, 1.9, 2.0, 2.1, and 2.2 V of 12-500 mAh.

The embodiments will be better understood by reference to Figure 1 which shows a cylindrical cell 1 in elevational cross-section, with the cell having a nail-type or bobbin-type construction and dimensions comparable to a conventional LR6 (AA) size alkaline cell, which is particularly well-suited to the embodiments. However, it is to be understood that cells according to the embodiments can have other sizes and shapes, such as a prismatic or button-type shape; and electrode configurations, as known in the art. The materials and designs for the components of the electrochemical cell illustrated in Figure 1 are for the purposes of illustration, and other materials and designs may be substituted. Moreover, in certain embodiments, the cathode and anode materials may be coated onto a surface of a separator and/or current collector and rolled to form a "jelly roll" configuration.

In Figure 1, an electrochemical cell **1** is shown, including a container or can **10** having a closed bottom end **24,** a top end **22** and sidewall **26** there between. The closed bottom end **24** includes a terminal cover **20** including a protrusion. The can **10** has an inner wall **16.** In the embodiment, a positive terminal cover **20** is welded or otherwise attached to the bottom end **24.** In one embodiment, the terminal cover **20** can be formed with plated steel for example with a protruding nub at its center region. Container **10** can be formed of a metal, such as steel, preferably plated on its interior with nickel, cobalt and/or other metals or alloys, or other materials, possessing sufficient structural properties that are compatible with the various inputs in an electrochemical cell. A label **28** can be formed about the exterior surface of container **10** and can be formed over the peripheral edges of the positive terminal cover **20** and negative terminal cover **46,** so long as the negative terminal cover **46** is electrically insulated from container **10** and positive terminal **20.**

Disposed within the container **10** are a first electrode **18** and second electrode **12** with a separator **14** therebetween. First electrode **18** is disposed within the space defined by separator **14** and closure assembly **40** secured to open end **22** of container **10.** Closed end **24,** sidewall **26,** and closure assembly **40** define a cavity in which the electrodes of the cell are housed.

Closure assembly **40** comprises a closure member **42** such as a gasket, a current collector **44** and conductive terminal **46** in electrical contact with current collector **44.** Closure member **42** preferably contains a pressure relief vent that will allow the closure member to rupture if the cell's internal pressure becomes excessive. Closure member **42** can be formed from a polymeric or elastomer material, for example Nylon-6,6 or Nylon-6,12, an injection-moldable polymeric blend, such as polypropylene matrix combined with poly(phenylene oxide) or polystyrene, or another material, such as a metal, provided that the current collector **44** and conductive terminal **46** are electrically insulated from container **10** which serves as the current collector for the second electrode **12.** In the embodiment illustrated, current collector **44** is an elongated nail or bobbin-shaped component. Current collector **44** is made of metal or metal alloys, such as copper or brass, conductively plated metallic or plastic collectors or the like. Other suitable materials can be utilized. Current collector **44** is inserted through a preferably centrally located hole in closure member **42.**

First electrode **18** is preferably a negative electrode or anode. The negative electrode includes a mixture of zinc (as an active material), an electrically conductive material, solid zinc oxide or zinc hydroxide particles, or dissolved zinc oxide or zinc hydroxide, and a surfactant. The negative electrode can optionally include other additives, for example a binder or a gelling agent, and the like. Preferably, the volume of active material utilized in the negative electrode is sufficient to maintain a desired particle-to-particle contact and a desired anode to cathode (A:C) ratio.

Particle-to-particle contact should be maintained during the useful life of the battery. If the volume of active material in the negative electrode is too low, the cell's voltage may suddenly drop to an unacceptably low value when the cell is powering a device. The voltage drop is believed to be caused by a loss of continuity in the conductive matrix of the negative electrode. The conductive matrix can be formed from undischarged active material particles, conductive electrochemically formed oxides, or a combination thereof. A voltage drop can occur after oxide has started to form, but before a sufficient network is built to bridge between all active material particles present.

Zinc suitable for use in the embodiments may be purchased from a number of different commercial sources under various designations, such as BIA 100, BIA 115. Umicore S. A., Brussels, Belgium is an example of a zinc supplier. In a preferred embodiment, the zinc powder generally has 25 to 40 percent fines less than 75 microns, and preferably 28 to 38 percent fines less than 75 microns. Generally lower percentages of fines will not allow desired DSC service to be realized and utilizing a higher percentage of fines can lead to increased gassing. A correct zinc alloy is needed in order to reduce negative electrode gassing in cells and to maintain test service results.

In an embodiment, the solid zinc oxide is a type of zinc oxide material with a Brunauer, Emmett, and Teller (BET) surface area greater than 4 square meters per gram containing greater than 0.1 weight percent of magnesium compounds and/or sodium compounds, such as, but in no way limited to, magnesium sulfate (MgSO₄), magnesium carbonate (MgCO₃), magnesium oxide (MgO), sodium sulfate (Na₂SO₄), and sodium carbonate (Na₂CO₃). The magnesium and/or sodium compounds in the solid zinc oxide particles enable uniform discharge across the anode, which helps mitigate the internal cell shorting caused by the concentrated ZnO crystals formed at anode/separator interface. In an embodiment, the BET surface area is greater than 20 square meters per gram. In an embodiment, the BET surface area is greater than 4, 5, 6, 7, 8, 9, 10, 11, 12, 13, 14, 15, 16, 17, 18, 19, or 20 meters per gram.

A surfactant that is either a nonionic or anionic surfactant, or a combination thereof is present in the negative electrode. In an embodiment, the surfactant is a phosphate ester surfactant. It has been found that anode resistance is increased during discharge by the addition of solid zinc oxide particles alone but is mitigated by the addition of the surfactant. The addition of the surfactant increases the surface charge density of the solid zinc oxide particles and lowers anode resistance as indicated above. Use of a surfactant is believed to aid in forming a more porous discharge product when the surfactant adsorbs on the solid zinc oxide particles. When the surfactant is anionic, it carries a negative charge and, in alkaline solution, surfactant adsorbed on the surface of the solid zinc oxide particles is believed to change the surface charge density of the solid zinc oxide or zinc hydroxide particle surfaces. The adsorbed surfactant is believed to cause a repulsive electrostatic interaction between the solid zinc oxide or zinc hydroxide particles. It is believed that the surfactant reduces anode resistance increase caused by the addition of solid zinc oxide or zinc hydroxide particles because the adsorbed surfactant on solid zinc oxide particles results in enhanced surface charge density of solid zinc oxide or zinc hydroxide particle surface. The higher the BET surface area of solid zinc oxide, the more surfactant can be adsorbed on the solid zinc oxide particle's surface. In an embodiment, the surfactant concentration is about 5-50 ppm by weight, relative to the electrode active material. In an embodiment, the surfactant concentration is about 10-20 ppm.

In an embodiment, the negative electrode comprises solid zinc oxide or equivalent particles in an amount from about 0.1 to 12 weight percent, based on the total weight of the negative electrode. In an embodiment, the negative electrode comprises solid zinc oxide or equivalent particles in an amount from about 1 to 7 weight percent. In an embodiment, the negative electrode comprises solid zinc oxide equivalent particles in an amount from about 0.5 to 1.5 weight percent. In a more preferred embodiment, the negative electrode comprises solid zinc oxide or equivalent particles in an amount of about 1.2 weight percent.

In an embodiment, the cell comprises solid zinc oxide equivalent particles in an amount from about 0.05 weight percent to about 5 weight percent of the full cell weight. In an embodiment, the cell comprises solid zinc oxide equivalent particles in an amount from about 0.1 weight percent to about 5 weight percent of the full cell weight. In an embodiment, the cell comprises solid zinc oxide equivalent particles in an amount of about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0 weight percent of the full cell weight.

In an embodiment, the solid zinc oxide is substituted, so as to reduce its solubility. In an embodiment, a portion of the zinc in the solid zinc oxide is substituted with another cation. In an embodiment, the substituted solid zinc oxide has the formula Zn₁₋ₓ YₓO, wherein Y is at least one cation substituent, and 0 < x ≤ 0.50. In an embodiment, the cation substituent is selected from the group consisting of Ca, Bi, Ba, Al, Mg, Si, Be, and Sr, and any combination thereof. In an embodiment, x is 0.01-0.40, or 0.02-0.35, or 0.4-0.30, or 0.05-0.25, or 0.10-0.20. In an embodiment, x is ≥0.01, ≥0.02, ≥0.04, ≥0.06, ≥0.08, ≥0.10, ≥0.12, ≥0.14, ≥0.16, ≥0.18, ≥0.20, ≥0.25, ≥0.30,≥0.35, or ≥0.40.

In an embodiment, a portion of the oxygen in the solid zinc oxide is substituted with another anion. In an embodiment, the substituted solid zinc oxide has the formula ZnO_{1-w}A_{(2w/z)}, wherein A is at least one anion substituent, 0 < w ≤ 0.50, and z is the charge of the anion substituent. In an embodiment, the anion substituent is selected from the group consisting of S²⁻, CO₃²⁻, and PO₄³⁻, and any combination thereof. In an embodiment, w is 0.01-0.40, or 0.02-0.35, or 0.4-0.30, or 0.05-0.25, or 0.10-0.20. In an embodiment, w is ≥0.01, ≥0.02, ≥0.04, ≥0.06, ≥0.08, ≥0.10, ≥0.12, ≥0.14, ≥0.16, ≥0.18, ≥0.20, ≥0.25, ≥0.30,≥0.35, or ≥0.40. In an embodiment, the solid zinc oxide comprises a cation substituent and an anion substituent.

The aqueous alkaline electrolyte solution (or simply "aqueous electrolyte solution") comprises an alkaline metal hydroxide such as potassium hydroxide (KOH), sodium hydroxide (NaOH), or the like, or mixtures thereof. Potassium hydroxide is preferred. The alkaline electrolyte used to form the gelled electrolyte of the negative electrode contains the alkaline metal hydroxide in an amount from about 1 to about 50 weight percent, for example from about 16 to about 36 weight percent, or from about 16 to about 28 weight percent, and specifically from about 18 to about 22 weight percent, or about 20 weight percent, based on the total weight of the alkaline electrolyte solution. In an embodiment, said alkaline metal hydroxide is present in an amount from 16-36 weight percent. In an embodiment, said alkaline metal hydroxide is present in an amount greater than or equal to 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 weight percent. In an embodiment, said alkaline metal hydroxide is present in an amount less than or equal to 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 weight percent. In an embodiment, said alkaline metal hydroxide is present in an amount equal to about 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 weight percent.

A gelling agent is preferably utilized in the negative electrode as is well known in the art, such as a crosslinked polyacrylic acid, such as Carbopol^{®} 940, which is available from Noveon, Inc. of Cleveland, Ohio, USA. Carboxymethylcellulose, polyacrylamide and sodium polyacrylate are examples of other gelling agents that are suitable for use in an alkaline electrolyte solution. Gelling agents are desirable in order to maintain a substantially uniform dispersion of zinc and solid zinc oxide particles in the negative electrode. The amount of gelling agent present is chosen so that lower rates of electrolyte separation are obtained and anode viscosity in yield stress are not too great which can lead to problems with anode dispensing.

Dissolved zinc oxide or zinc hydroxide is present in the anode, preferably via dissolution in the aqueous electrolyte solution, in order to improve plating on the bobbin or nail current collector and to lower negative electrode shelf gassing. The dissolved zinc oxide or zinc hydroxide added is separate and distinct from the solid zinc oxide or zinc hydroxide particles present in the anode composition. Levels of dissolved zinc oxide or equivalent in an amount of 3-4 weight percent based on the total weight of the negative electrode electrolyte solution are preferred in one embodiment.

In an embodiment, the dissolved zinc oxide equivalent is present in the negative electrode electrolyte solution in an amount of greater than 0.1 weight percent. In an embodiment, the dissolved zinc oxide equivalent is present in the negative electrode electrolyte solution in an amount of greater than 0.1 to greater than 14 weight percent. The soluble or dissolved zinc oxide generally has a BET surface area of about 4 m²/g or less measured utilizing a Tristar 3000 BET specific surface area analyzer from Micrometrics having a multi-point calibration after the zinc oxide has been degassed for one hour at 150° C; and a particle size D50 (mean diameter) of about 1 micron, measured using a CILAS particle size analyzer as indicated above.

The negative electrode can be formed in a number of different ways as known in the art. For example, the negative electrode components can be dry blended and added to the cell, with alkaline electrolyte being added separately or, as in a preferred embodiment, a pre-gelled negative electrode process is utilized.

In one embodiment, the zinc and solid zinc oxide or zinc hydroxide are powders, and other optional powders other than the gelling agent, are combined and mixed. Afterwards, the surfactant is introduced into the mixture containing the zinc and solid zinc oxide or zinc hydroxide particles. A pre-gel comprising alkaline electrolyte solution, soluble zinc oxide or zinc hydroxide and gelling agent, and optionally other liquid components, are introduced to the surfactant, zinc and solid zinc oxide or zinc hydroxide mixture which are further mixed to obtain a substantially homogenous mixture before addition to the cell. Alternatively, in a further preferred embodiment, the solid zinc oxide or zinc hydroxide is pre-dispersed in a negative electrode pre-gel comprising the alkaline electrolyte, gelling agent, soluble zinc oxide and other desired liquids, and blended, such as for about 15 minutes. The solid zinc oxide or zinc hydroxide particles and surfactant are then added and the negative electrode is blended for an additional period of time, such as about 20 minutes. The amount of gelled electrolyte utilized in the negative electrode is generally from about 22 to about 47 weight percent, for example from about 25 to about 35 weight percent, or about 32 weight percent based on the total weight of the negative electrode. Volume percent of the gelled electrolyte may be from about 63 to about 80 percent, for example about 70% based on the total volume of the negative electrode.

In an embodiment, the ratio of silicon donor to dissolved zinc oxide or equivalent, by weight, is from 0.033 to 152.2. In an embodiment, the ratio of silicon donor to dissolved zinc oxide, by weight, is from 0.05 to 150, or 0.1 to 130, or 0.3 to 110, or 0.5 to 100, or 0.7 to 90, or 1 to 80, or 1.5 to 70, or 2 to 60, or 3 to 50, or 4 to 40, or 5 to 30, or 6 to 20. In an embodiment, the ratio of silicon donor to dissolved zinc oxide equivalent, by weight, is greater than, less than, or equal to about 0.033, 0.05, 0.1, 0.2, 0.5, 1, 1.5, 2, 3, 4, 5, 10, 15, 20, 25, 30, 40, 50, 60, 70, 80, 90, 100, 110, 120, 130, 140, 150, or 152.2. In an embodiment, the ratio of silicon donor to dissolved zinc oxide equivalent, by weight percent, is ≥0.2, ≥0.3, ≥0.4, ≥0.5, ≥0.6, ≥0.7, ≥0.8 ≥0.9, ≥1.0, ≥1.1, ≥1.2, ≥1.3, ≥1.4, ≥1.5, or ≥1.6. This ratio may account for the silicon donor and the dissolved zinc oxide equivalent in the anode, electrolyte shot solution, or the full cell.

In an embodiment, the ratio of silicon donor to total zinc oxide equivalent, by weight, is from 0.012 to 5.7. In an embodiment, the ratio of silicon donor to total zinc oxide equivalent, by weight, is from 0.02 to 5.5, or 0.05 to 5, or 0.1 to 4.5, or 0.5 to 4, or 1.0 to 3.5. In an embodiment, the ratio of silicon donor to total zinc oxide equivalent, by weight, is greater than, less than, or equal to about 0.012, 0.02, 0.05, 0.1, 0.2, 0.5, 1, 1.5, 2, 2.5, 3, 3.5, 4, 4.5, 5, 5.5, or 5.7. In an embodiment, the ratio of silicon donor to total zinc oxide equivalent, by weight, is ≥0.2, ≥0.3, ≥0.4, ≥0.5, ≥0.6, ≥0.7, ≥0.8 ≥0.9, ≥1.0, ≥1.1, ≥1.2, ≥1.3, ≥1.4, ≥1.5, or ≥1.6. This ratio may account for the silicon donor and the dissolved zinc oxide equivalent in the anode, electrolyte shot solution, or the full cell.

In an embodiment, the absolute weight of silica (SiO₂) in the cell is greater than 0.002 grams in an LR6 battery. In an embodiment, the absolute weight of the silicon donor in the cell is greater than 0.002 grams. In an embodiment, the absolute weight of the silicon donor in the cell is from 0.002-1.0 grams. In an embodiment, the absolute weight of the silicon donor in the cell is greater than, less than, or equal to about 0.002, 0.004, 0.006, 0.008, 0.01, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, or 1.0 grams, or a range between any two of these values.

In addition to the aqueous alkaline electrolyte absorbed by the gelling agent during the negative electrode manufacturing process, an additional quantity of an aqueous solution of alkaline metal hydroxide is added to the cell during the manufacturing process. The electrolyte shot may be incorporated into the cell by disposing it into the cavity defined by the positive electrode or negative electrode, or combinations thereof. The method used to incorporate the electrolyte shot into the cell is not critical provided it has access to the negative electrode, positive electrode, and separator. In one embodiment, an electrolyte shot is added both prior to addition of the negative electrode mixture as well as after addition. In one embodiment, about 0.97 grams of 1-50 weight percent potassium hydroxide solution is added to an LR6 type cell as an electrolyte shot. In one embodiment, about 0.97 grams of 34 weight percent potassium hydroxide solution is added to an LR6 type cell as an electrolyte shot, with about 0.87 grams added to the separator lined cavity before the negative electrode is inserted. The remaining portion of the 34 weight percent potassium hydroxide solution is injected into the separator lined cavity after the negative electrode has been inserted. In an embodiment, this electrolyte shot solution comprises dissolved zinc oxide equivalent in a range of about 0.01-12.0 weight percent. In another embodiment, the electrolyte shot solution comprises dissolved zinc oxide equivalent in a range of at least about 0.1 to at least about 14.0 weight percent. In a preferred embodiment, the electrolyte shot comprises dissolved zinc oxide equivalent in an amount of between about 4.0-6.0 weight percent. In embodiments, the electrolyte shot comprises dissolved zinc oxide equivalent in an amount of greater than, less than, or equal to about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 7.0, 8.0, 9.0, 10.0, 11.0, 12.0, 13.0, or 14.0 weight percent, or in any range between two of these values.

In and embodiment, the electrolyte shot may be greater than or equal to about 5%, 6%, 7,%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37,%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100% saturated with dissolved zinc oxide or zinc hydroxide, or more than 100% saturated with dissolved zinc oxide or zinc hydroxide.

A second electrode **12,** also referred to herein as the positive electrode or cathode, includes an electrochemically active material. Electrolytic manganese dioxide (EMD) is a commonly-used electrochemically active material, and is present in an amount generally from about 80 to about 92 weight percent and preferably from about 86 to 92 weight percent by weight based on the total weight of the positive electrode, i.e., EMD, conductive material, positive electrode electrolyte and additives, including organic additive(s), if present. The positive electrode is formed by combining and mixing desired components of the electrode followed by dispensing a quantity of the mixture into the open end of the container and then using a ram to mold the mixture into a solid tubular configuration that defines a cavity within the container in which the separator **14** and first electrode **18** are later disposed. Second electrode **12** has a ledge **30** and an interior surface **32** as illustrated in Figure 1. Alternatively, the positive electrode may be formed by pre-forming a plurality of rings from the mixture comprising EMD, and optionally, additive(s), and then inserting the rings into the container to form the tubular-shaped second electrode. The cell shown in Figure 1 would typically include 3 or 4 rings.

The positive electrode can include other components such as a conductive material, for example graphite, that when mixed with the EMD provides an electrically conductive matrix substantially throughout the positive electrode. Conductive material can be natural, i.e., mined, or synthetic, i.e., manufactured. In one embodiment, the cells include a positive electrode having an active material or oxide to carbon ratio (O:C ratio) that ranges from about 12 to about 22. Too high of an oxide to carbon ratio increases the container to cathode resistance, which affects the overall cell resistance and can have a potential effect on high rate tests, such as the DSC test, or higher cut-off voltages. Furthermore, the graphite can be expanded or non-expanded. Suppliers of graphite for use in alkaline batteries include Timcal America of Westlake, Ohio; Superior Graphite Company of Chicago, Ill.; and Lonza, Ltd. of Basel, Switzerland. Conductive material is present generally in an amount from about 5 to about 10 weight percent based on the total weight of the positive electrode. Too much graphite can reduce EMD input, and thus cell capacity; too little graphite can increase container to cathode contact resistance and/or bulk cathode resistance. An example of an additional additive is barium sulfate (BaSO₄), which is commercially available from Bario E. Derivati S.p.A. of Massa, Italy. The barium sulfate is present in an amount generally from about 0.5 to about 2 weight percent based on the total weight of the positive electrode. Other additives can include, for example, barium acetate, titanium dioxide, binders such as coathylene, and calcium stearate.

In one embodiment, the positive electrode component (such as EMD), conductive material, and barium sulfate, and optionally additive(s) are mixed together to form a homogeneous mixture. During the mixing process, an alkaline electrolyte solution, such as from about 1% to about 50% KOH solution, optionally about 37% to about 40% KOH solution, and optionally including organic additive(s), is evenly dispersed into the mixture thereby insuring a uniform distribution of the solution throughout the positive electrode materials. In an embodiment, the alkaline electrolyte solution used to form the cathode comprises dissolved zinc oxide or zinc hydroxide, in any amount up to and including being saturated with dissolved zinc oxide or zinc hydroxide, or supersaturated (>100% saturated) with dissolved zinc oxide or zinc hydroxide. The mixture is then added to the container and molded utilizing a ram. Moisture within the container and positive electrode mix before and after molding, and components of the mix are preferably optimized to allow quality positive electrodes to be molded. Mix moisture optimization allows positive electrodes to be molded with minimal splash and flash due to wet mixes, and with minimal spalling and excessive tool wear due to dry mixes, with optimization helping to achieve a desired high cathode weight. Moisture content in the positive electrode mixture can affect the overall cell electrolyte balance and has an impact on high rate testing.

One of the parameters utilized by cell designers characterizes cell design as the ratio of one electrode's electrochemical capacity to the opposing electrode's electrochemical capacity, such as the anode (A) to cathode (C) ratio, i.e., A:C ratio. For an LR6 type alkaline primary cell that utilizes zinc in the negative electrode or anode and manganese dioxide (MnO₂) in the positive electrode or cathode, the A:C ratio may be greater than 1.32:1, such as greater than 1.34:1, and specifically 1.36:1 for impact molded positive electrodes. The A:C ratio for ring molded positive electrodes can be lower, such as about 1.3:1 to about 1.1:1.

Separator **14** is provided in order to separate first electrode **18** from second electrode **12.** Separator **14** maintains a physical dielectric separation of the positive electrode's electrochemically active material from the electrochemically active material of the negative electrode and allows for transport of ions between the electrode materials. In addition, the separator acts as a wicking medium for the electrolyte and as a collar that prevents fragmented portions of the negative electrode from contacting the top of the positive electrode. Separator **14** can be a layered ion permeable, non-woven fibrous fabric. A separator may have one layer, or two or more layers. Conventional separators are usually formed either by pre-forming the separator material into a cup-shaped basket that is subsequently inserted under the cavity defined by second electrode **12** and closed end **24** and any positive electrode material thereon. Conventional pre-formed separators are typically made up of a sheet of non-woven fabric rolled into a cylindrical shape that conforms to the inside walls of the second electrode and has a closed bottom end. Two or more layer separators may be formed by forming a basket during cell assembly by inserting two rectangular sheets of separator into the cavity with the material angularly rotated 90° relative to each other.

In an embodiment the separator is a low-porosity separator, or a laminated separator with a cellophane layer. In an embodiment, the separator is a low-porosity separator with the mean pore size less than 12 microns and the maximum pore size less than 30 microns.

In an embodiment, the separator is a bilayer with a high-density layer and a low-density layer. In some embodiments, the pore size of the high-density layer may be less than or equal to 1 micron. Without being bound by theory, it is believed that this pore size in the high-density layer reduces shorting in the battery by preventing ZnO reaction product precipitate from creating a conductive network between the electrodes. Further, the low-density layer improves the absorption of electrolytes in order to improve high-rate performance, such as that measured by the Digital Still Camera (DSC) test. Further, utilization of a separator with these characteristics results in decreased shorting even when a thinner separator thickness is used. This decrease in separator thickness increases available volume within the cell which can be used for additional active material and/or more additives (e.g., increasing the amount of silicon donor in the anode without adjusting amounts of other materials within the cell).

In an embodiment, the bilayer separator comprises at least one layer comprising pores with a mean diameter of between about 0.3-20 microns. In an embodiment, the pores have a mean diameter of about 1-10 microns, or about 2-8 microns, or about 3-6 microns, or about 4-5 microns, or about 4.5 microns. In an embodiment, the pores have a mean diameter of greater than, less than, or equal to about 1, 2, 3, 4, 5, 6, 7, 8, 9, 10, 11, 12, 13, 14, 15, 16, 17, 18, 19, or 20 microns, or a range between any two of these values. In an embodiment, the pores have a mean diameter of less than or equal to 0.3, 0.4, 0.5, 0.6, 0.7, 0.8, 0.9, 1.0, 1.1, 1.2, 1.3, 1.4, or 1.5 microns.

All of the references cited above, as well as all references cited herein, are incorporated herein by reference in their entireties.

While embodiments have been illustrated and described in detail above, such illustration and description are to be considered illustrative or exemplary and not restrictive. It will be understood that changes and modifications may be made by those of ordinary skill within the scope and spirit of the following claims. In particular, embodiments include any combination of features from the different embodiments described above and below.

The embodiments are additionally described by way of the following illustrative non-limiting examples that provide a better understanding of the embodiments and of its many advantages. The following examples are included to demonstrate preferred embodiments. It should be appreciated by those of skill in the art that the techniques disclosed in the examples which follow represent techniques used in the embodiments to function well in the practice of the embodiments, and thus can be considered to constitute preferred modes for its practice. However, those of skill in the art should, in light of the present disclosure, appreciate that many changes can be made in the specific embodiments which are disclosed and still obtain a like or similar result without departing from the spirit and scope of the embodiments.

### DISCUSSION AND EXAMPLES

Discharge of zinc-based batteries involves oxidation of the zinc in the anode, resulting in the formation of zinc oxide, as mentioned previously. The zinc oxide reaction product forms a passivation layer, which inhibits the efficient discharge of the remaining zinc. By manufacturing with dissolved zinc oxide or zinc hydroxide (both in the electrolyte shot solution and the solution comprised in the anode) and additional solid zinc oxide or zinc hydroxide particles (in the anode), the solid reaction product is encouraged to form elsewhere. Preventing the passivation layer from coating the anode allows for better utilization of the zinc. This results in a substantial improvement in the runtime on high rate tests, and specifically the Digital Still Camera (DSC) ANSI standard test.

While they show improved performance when compared to previous battery models, batteries containing zinc and/or zinc oxide or zinc hydroxide in both the anode and the electrolyte shot solution may exhibit internal shorting during discharge. It is believed that the shortage is related to the crystal formation of zinc oxide reaction product which causes a conductive network bridge between the electrodes. Internal shorting in such cells occurs when there is an electrically conductive path through the separator that contacts the cathode and the anode electrodes. Shorting causes the battery to drain, thereby decreasing the available capacity that is intended to power a device. Silicate functions to alter the shape of the crystalline zinc oxide by inhibiting the formation of elongated crystal chains. Battery runtime improves as an increasing amount of the silicon donor is added and, in turn, the concentration of silicate increases, because the crystal chains do not form and bridge the electrodes, thereby decreasing shorting and increasing performance. While many of the embodiments herein refer to sodium silicate and potassium silicate, other compounds may be used.

Further, a bilayer separator allows for the flow of electrolyte between the anode while creating a barrier for the zinc oxide crystals. An ideal separator would be one having a low-density layer which is porous enough to encourage electrolyte absorption and a high-density layer with pores small enough to prevent the transfer of zinc oxide crystals, which are between one and three microns in size. While most of the discussion herein refers to zinc oxide being added to electrodes and electrolyte solutions, other compounds which serve as sources of zincate ions may be used instead of, or in addition to, zinc oxide. For example, the embodiments described herein may contain zinc hydroxide (Zn(OH)₂) in the electrodes and/or electrolyte solutions instead of, or in addition to, zinc oxide.

### Demonstration of Internal Shorting

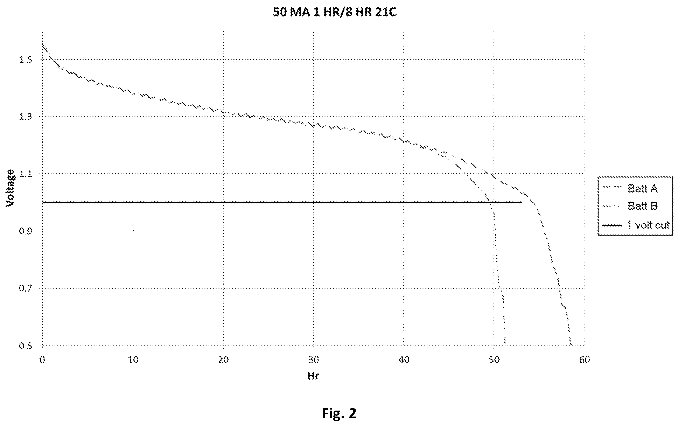

Figure 2 shows the effect of internal shorting on a cell. Specifically, Figure 2 depicts a voltage vs. time plot comparing two cells of the same construction. Both cells were discharged at a current of 50 mA, at 21 °C; the discharge was conducted for 1 hour of every 8 hours (meaning that in the 8 hour period, the current was on for 1 hour and off for 7 hours).

The voltage of Battery B drops off early, compared to Battery A, due to internal shorting. Internal shorting results in worse battery performance, along with more variable performance, which is also undesirable.

### Tradeoff in DSC runtime vs Low Drain Runtime

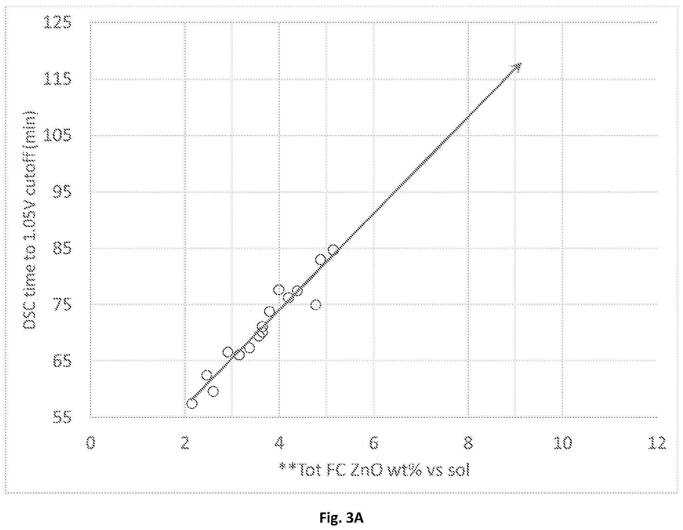

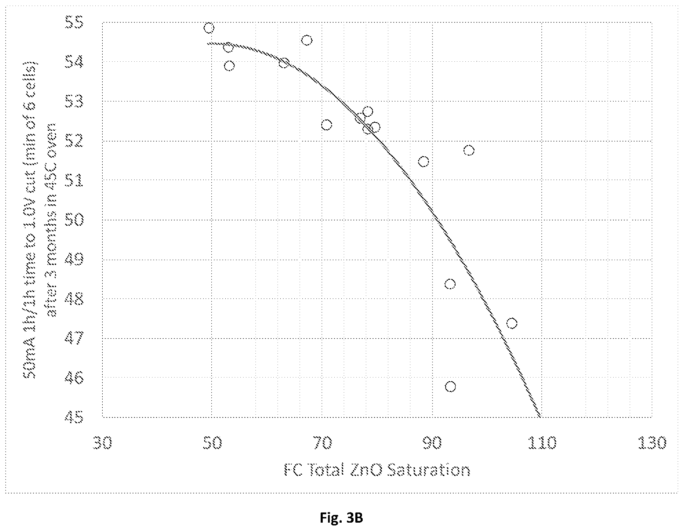

**Figures 3A** and **3B** demonstrate the tradeoff in performance gains from increased ZnO levels in different type of discharge tests. Specifically, **Figure 3A** shows a plot for DSC (an intermittent, high-rate discharge) test performance, in runtime (measured in minutes) to a cutoff voltage of 1.05V, compared to the full cell electrolyte solution ZnO weight percent. There is a clear, direct correlation between increased ZnO weight percent and increased DSC performance.
**Figure 3B****,** on the other hand, is a plot of constant 50 mA runtime performance (measured in minutes, to a voltage cutoff of 1.0V), for cells aged at 45°C for 3 months, vs. ZnO saturation in the full cell. Here, for the constant, low-rate discharge, the performance drops as the ZnO saturation increases. This is due to increased internal shorting at higher ZnO levels. Accordingly, there is a tradeoff in increased ZnO levels, as increased ZnO levels can provide improved DSC performance, but also correlate to increased internal shorting.

### Comparison of Cell Runtime for Varying Silicate to Zinc Oxide

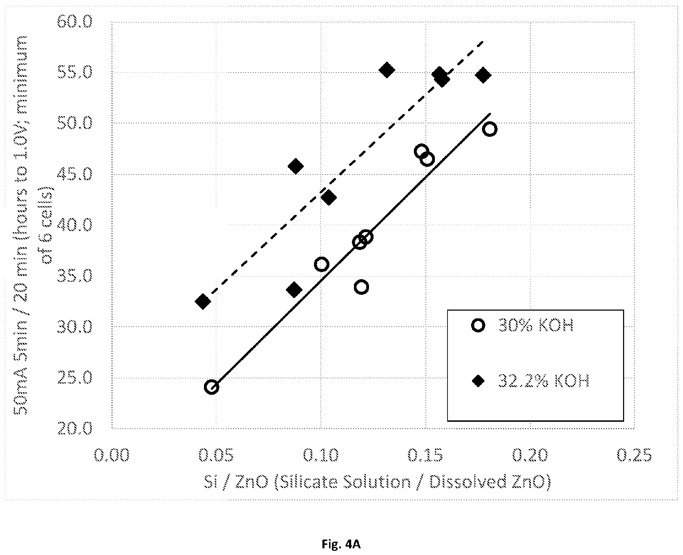

**Figure 4A** shows a graph illustrating changes in runtime with increased weight ratios of sodium silicate to dissolved zinc oxide. This trial was conducted using two different concentrations of potassium hydroxide (KOH) (30% KOH and 32.2% KOH, by weight). An N-grade sodium silicate solution comprising 28.7 weight percent silicon dioxide was added to the cell. In traditional cells, 0.4 weight percent of the N-grade solution is added. For this trial, the weight percent of the N-grade solution added to the cell was increased from 0.4 to 1.6.

The trial was conducted by discharging each cell at 50mA drain rate for 5 minutes, followed by 15 minutes of rest. The discharge cycle continues until the cell's closed-circuit voltage (CCV) reaches the 1.0 volt cutoff. This trial imitates battery use in a device having a low drain rate such as a remote control or a radio. This procedure is effective to determine if there has been shorting in cells. In the improved cell with a combination of solid and dissolved zinc and/or zinc oxide, shorting decreased as the amount of sodium silicate in the cell relative to the amount of dissolved zinc oxide in the cell was increased from a ratio of 0.04 to a ratio of 0.18, by weight. These improvements were observed at multiple concentrations of potassium hydroxide. These results confirm that heightened levels of silicate inhibit shorting in the zinc oxide-containing cell.

The results also demonstrate a minor effect from KOH level. Specifically, the cells with the higher KOH level demonstrated improved runtime.

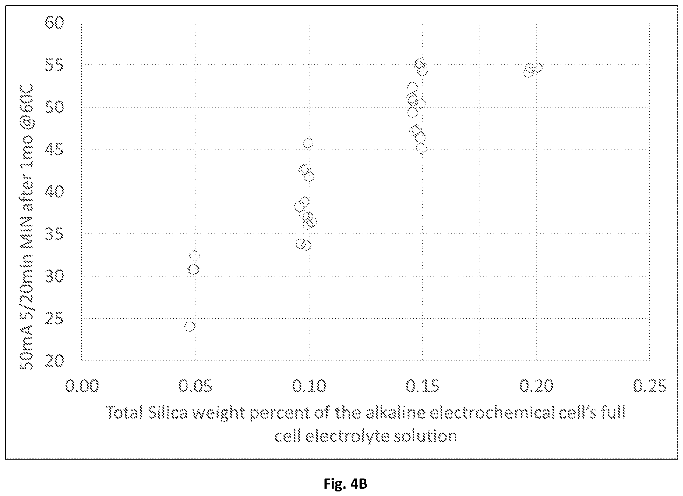

**Figure 4B** demonstrates a plot of runtime (hours to 1.0 V) vs. silica weight percent of the cell's full cell electrolyte solution, following cell aging at 60°C for one month. A clear correlation between increased silica weight percent and increased runtime is evident.

### Comparison of Cell Runtime for Varying Concentrations of Sodium Silicate with both Control Separator and Bilayer Type Separator

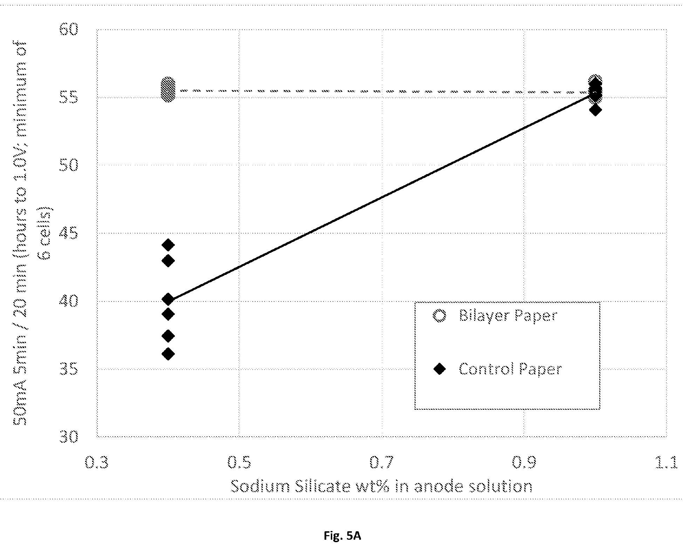

**Figure 5A** illustrates that the amount by which cell runtime is increased by an increase in silicate differs with cells having different separator types. In this trial, the cells were stored in an oven having a temperature of 60°C and a relative humidity of 50% for 4 weeks prior to discharge at a drain rate of 50 mA. As shown in Figure 5A, in cells utilizing the control separator paper with a larger pore size, increasing the total weight percent of sodium silicate in the anode solution from about 0.4 weight percent to about 1 weight percent improved the average runtime by approximately 15 hours, further evidencing improvements in the cell when a silicon donor is added.

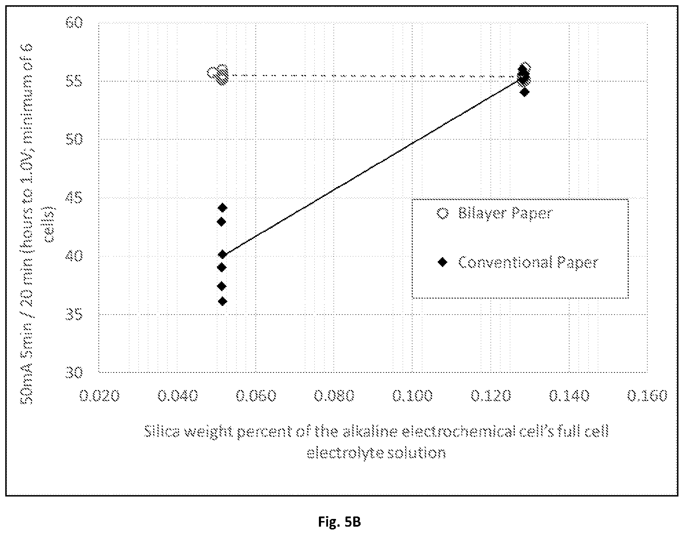

It is believed that increasing the sodium silicate levels in the anode suppresses the formation of zinc oxide dendrites which provide the shorting pathway between the anode and cathode. In contrast, for a cell utilizing a bilayer separator with one high-density layer and one low-density layer, internal cell shorting was eliminated at both 0.4 weight percent and 1.0 weight percent of sodium silicate level. The cell runtime is independent of the sodium silicate level in the anode, indicating the robustness of bilayer type separator on shorting protection. Figure 5B depicts the same runtime data, but compared to the silica weight percent of the full cell electrolyte solution; the same improvements from increased silica and the bilayer separator are both evident.

These findings support that bilayer separator is an improvement on the previous invention and functions to decrease or eliminate shorting. It is believed that this is because the reduced pore size in the high-density layer inhibits zinc oxide from forming a bridge through the separator while the low-density layer allows for improved electrolyte absorption.

Many modifications and other embodiments will come to mind to one skilled in the art to which these embodiments pertain having the benefit of the teachings presented in the foregoing descriptions and the associated drawings. Therefore, it is to be understood that the embodiments are not to be limited to the specific embodiments disclosed and that modifications and other embodiments are intended to be included within the scope of the appended claims and list of embodiments disclosed herein. Although specific terms are employed herein, they are used in a generic and descriptive sense only and not for purposes of limitation. For the embodiments described in this application, each embodiment disclosed herein is contemplated as being applicable to each of the other disclosed embodiments. For example, while this application mostly describes embodiments comprising solid and dissolved zinc oxide, similar embodiments in which all or some of the solid and/or dissolved zinc oxide is replaced by zinc hydroxide are also considered to be within the scope of the embodiments. Similarly, for any embodiment referring to a silicate, or SiO₂, similar embodiments in which all or some of the silicate or SiO₂ is replaced by a different silicon donor are also considered to be within the scope of the embodiments.

The invention may be further understood with reference to the following clauses:
1. An alkaline electrochemical cell, comprising:
   a) a container; and
   b) an electrode assembly disposed within the container and comprising a cathode, an anode, a separator located between the cathode and the anode, and an electrolyte shot solution;

   wherein the anode comprises 1) solid zinc, 2) anolyte, 3) solid zinc oxide particles, solid zinc hydroxide particles, zinc oxide dissolved in said anolyte, or zinc hydroxide dissolved in said anolyte, and 4) a silicon donor;
   wherein the silicon donor is present in an amount of at least 0.036 weight percent of the alkaline electrochemical cell's full cell electrolyte solution.
2. The alkaline electrochemical cell of clause 1, wherein the alkaline electrochemical cell comprises a total zinc oxide equivalent weight of about 0.5-3.0 weight percent.
3. The alkaline electrochemical cell of any of clauses 1-2, wherein the anode comprises a gelled electrolyte, wherein the gelled electrolyte is prepared by combining a gelling agent with a first aqueous alkaline electrolyte solution, wherein the first aqueous alkaline electrolyte solution comprises an alkaline metal hydroxide electrolyte and dissolved zinc oxide.
4. The alkaline electrochemical cell of clause 1, wherein the anolyte comprises dissolved zinc oxide equivalent in an amount of 0.1-12 weight percent.
5. The alkaline electrochemical cell of clause 4, wherein the anolyte comprises dissolved zinc oxide equivalent in an amount of about 1.5-2.5 weight percent.
6. The alkaline electrochemical cell of clause 1, wherein the anolyte is at least 5% saturated with zinc oxide or zinc hydroxide.
7. The alkaline electrochemical cell of any one of clauses 3-6, wherein the cathode comprises a catholyte, wherein the catholyte comprises an alkaline metal hydroxide electrolyte and dissolved zinc oxide.
8. The alkaline electrochemical cell of clause 7, wherein the catholyte comprises dissolved zinc oxide equivalent in an amount of 0.1-12 weight percent.
9. The alkaline electrochemical cell of clause 1 wherein the electrolyte shot solution comprises dissolved zinc oxide equivalent in an amount greater than 2.0 weight percent.
10. The alkaline electrochemical cell of clause 9, wherein the electrolyte shot solution comprises dissolved zinc oxide equivalent in an amount greater than 3.0 weight percent
11. The alkaline electrochemical cell of clause 1 wherein the electrolyte shot solution comprises an alkaline metal hydroxide and dissolved zinc oxide.
12. The alkaline electrochemical cell of clause 1 wherein the electrolyte shot solution comprises a silicon donor.
13. The alkaline electrochemical cell of clause 1 wherein the ratio of silicon donor to dissolved zinc oxide equivalent, by weight percent, is ≥0.016, ≥0.020, ≥0.025, ≥0.030, ≥0.035, ≥0.040, ≥0.045, ≥0.050, ≥0.055, ≥0.06, ≥0.065, ≥0.07, or ≥0.075.
14. The alkaline electrochemical cell of clause 1, wherein the absolute weight of silicon donor ranges from 0.002 to 1 gram in an LR6 cell.
15. The alkaline electrochemical cell of clause 1 wherein the solid zinc oxide particles have a Brunauer, Emmett and Teller (BET) surface area greater than 4 m²/g; and
   wherein the zinc oxide contains more than 0.1 weight percent of magnesium and/or sodium compounds.
16. The alkaline electrochemical cell of clause 1 wherein the separator is a bilayer separator comprising a high-density layer.
17. The alkaline electrochemical cell of clause 1 wherein the separator is a bilayer separator comprising a low-density layer.
18. The alkaline electrochemical cell of clause 16, wherein the bilayer separator is placed as a first or a second paper strip with the high-density layer facing the cathode.
19. The alkaline electrochemical cell of clause 16, wherein the mean pore size of the high-density layer is less than 1 microns.
20. The alkaline electrochemical cell of clause 1 wherein the surfactant concentration, relative to the anode active material, is between 5 and 50 ppm.
21. The alkaline electrochemical cell of clause 1, wherein the silicon donor is potassium silicate.
22. The alkaline electrochemical cell of clause 1, wherein the silicon donor is sodium silicate.
23. The alkaline electrochemical cell of clause 1, wherein the cathode comprises a silicon donor.
24. The alkaline electrochemical cell of clause 1, wherein the electrolyte solution further comprises silica.
25. The alkaline electrochemical cell of clause 1, wherein the full cell electrolyte concentration is about 15.0-40.0 weight percent.
26. The alkaline electrochemical cell of any one of clauses 1-25, wherein the total dissolved zinc oxide equivalent weight percent in the electrochemical cell's full cell electrolyte solution is at least about 0.5 weight percent.
27. The alkaline electrochemical cell of any one of clauses 1-25, wherein the total dissolved zinc oxide equivalent weight percent in the electrochemical cell's full cell electrolyte solution is at least about 11 weight percent.
28. The alkaline electrochemical cell of any one of clauses 1-25, wherein the electrochemical cell's full cell electrolyte is greater than 10% saturated with dissolved zinc oxide or zinc hydroxide.
29. The alkaline electrochemical cell of any one of clauses 1-25, wherein the solid zinc oxide or solid zinc hydroxide is substituted and comprises a cation substituent or an anion substituent, wherein the substituted solid zinc oxide or substituted solid zinc hydroxide is less soluble than unsubstituted solid zinc oxide or unsubstituted solid zinc hydroxide.
30. The alkaline electrochemical cell of any one of clauses 1-25, wherein the total cell saturation of zinc oxide or zinc hydroxide is at least about 40%.
31. The alkaline electrochemical cell of any one of clauses 1-25, wherein the cell has a voltage of 0.1 V - 2.0 V, 0.2 V - 1.9 V, 0.3 V - 1.8 V, 0.4 V - 1.7 V, 0.5 V - 1.6 V, 0.6 V - 1.5 V, 0.7 V - 1.4 V, 0.8 V - 1.3 V, 0.9 V - 1.2 V, 1.0 V - 1.1 V, or is 0.1 V, 0.2 V, 0.3 V, 0.4 V, 0.5 V, 0.6 V, 0.7 V, 0.8 V, 0.9 V, 1.0 V, 1.1 V, 1.2 V, 1.3 V, 1.4 V, 1.5 V, 1.6 V, 1.7 V, 1.8 V, 1.9 V, or 2.0 V.
32. An alkaline electrochemical cell, comprising:
   a) a container; and
   b) an electrode assembly disposed within the container and comprising a cathode, an anode, a separator located between the cathode and the anode, and an electrolyte shot solution;

   wherein the anode comprises 1) solid zinc, 2) anolyte, and 3) solid zinc oxide particles, solid zinc hydroxide particles, zinc oxide dissolved in said anolyte, or zinc hydroxide dissolved in said anolyte; and
      wherein the total zinc oxide equivalent weight in the alkaline electrochemical cell's full cell electrolyte solution is at least 3.0 weight percent; and
   wherein the separator comprises a bilayer or low-porosity separator, or a laminated separator with a cellophane layer.
33. The alkaline electrochemical cell of clause 32 wherein the bilayer separator comprises a high-density layer and a low-density layer.
34. The alkaline electrochemical cell of clause 33 wherein the low-density layer is placed as a first or a second paper strip with the high-density layer facing the cathode.
35. The alkaline electrochemical cell of clause 32, wherein the bilayer separator has at least one layer comprising pores with a mean diameter that is less than or equal to 0.3, 0.4, 0.5, 0.6, 0.7, 0.8, 0.9, 1.0, 1.1, 1.2, 1.3, 1.4, or 1.5 microns.
36. The alkaline electrochemical cell of clause 32 wherein the surfactant concentration, relative to the anode active material, is between 5 and 50 ppm.
37. The alkaline electrochemical cell of clause 32, wherein the anode comprises sodium silicate or potassium silicate.
38. The alkaline electrochemical cell of clause 32 wherein the ratio of silicon donor to dissolved zinc oxide equivalent, by weight percent, is ≥0.016, ≥0.020, ≥0.025, ≥0.030, ≥0.035, ≥0.040, ≥0.045, ≥0.050, ≥0.055, ≥0.06, ≥0.065, ≥0.07, ≥0.075.
39. The alkaline electrochemical cell of clause 32, wherein the total cell saturation of zinc oxide or zinc hydroxide is at least about 30%.
40. The alkaline electrochemical cell of clause 32, wherein the total cell saturation of zinc oxide or zinc hydroxide is at least about 400%.
41. The alkaline electrochemical cell of clause 32, wherein the separator is a low porosity separator with the mean pore size less than 12 microns and the maximum pore size less than 30 microns.
42. The alkaline electrochemical cell of clause 32 wherein the separator is a laminated separator comprising a non-woven layer and a cellophane layer.
43. The alkaline electrochemical cell of clause 32, wherein the total dissolved zinc oxide weight percent in the full cell electrolyte solution is at least about 0.5 weight percent.
44. The alkaline electrochemical cell of clause 32, wherein the total dissolved zinc oxide weight percent in the full cell electrolyte solution is at least about 11 weight percent.
45. The alkaline electrochemical cell of clause 32, wherein the anode comprises solid zinc oxide particles in an amount from about 0.1 to 12 weight percent, based on the total weight of the negative electrode.
46. The alkaline electrochemical cell of clause 32, wherein the silicon donor is present in an amount of at least 0.036 weight percent of the alkaline electrochemical cell's full cell electrolyte solution.
47. The alkaline electrochemical cell of any one of clauses 1-46, wherein the full cell molarity of dissolved zinc oxide or zinc hydroxide is from about 0.1 to about 1.5.
48. The alkaline electrochemical cell of any one of clauses 1-46, wherein the total cell zinc oxide equivalent weight is from about 0.05 to about 0.7 g.
49. The alkaline electrochemical cell of any one of clauses 1-46, wherein the total number of Zn²⁺ moles in the cell is from about 0.00061 to about 0.00860.
50. The alkaline electrochemical cell of any one of clauses 1-46, wherein when charging the cell at 0.5 mA, at 21°C, the cell has a charging capacity to inflection of at least 25 mAh.
51. The alkaline electrochemical cell of any one of clauses 1-46, wherein when charging the cell at 1 mA, at 21°C, the cell has a charging capacity to inflection of at least 22 mAh.
52. The alkaline electrochemical cell of any one of clauses 1-46, wherein when charging the cell at 5 mA, at 21°C,the cell has a charging capacity to inflection of at least 17 mAh.
53. The alkaline electrochemical cell of any one of clauses 1-46, wherein when charging the cell at 10 mA, at 21°C,the cell has a charging capacity to inflection of at least 14 mAh.
54. The alkaline electrochemical cell of any one of clauses 1-46, wherein when charging the cell at 50 mA, at 21°C,the cell has a charging capacity to inflection of at least 13 mAh.
55. The alkaline electrochemical cell of any one of clauses 1-46, wherein when charging the cell at 100 mA, at 21°C, the cell has a charging capacity to inflection of at least 12 mAh.
56. The alkaline electrochemical cell of any one of clauses 1-46, wherein when charging the cell at 0.5 mA, at 21°C, the cell has a charging capacity to a voltage selected from the group consisting of 1.7, 1.8, 1.9, 2.0, 2.1, and 2.2 V of at least 25 mAh.
57. The alkaline electrochemical cell of any one of clauses 1-46, wherein when charging the cell at 1 mA, at 21°C, the cell has a charging capacity to a voltage selected from the group consisting of 1.7, 1.8, 1.9, 2.0, 2.1, and 2.2 V of at least 22 mAh.
58. The alkaline electrochemical cell of any one of clauses 1-46, wherein when charging the cell at 5 mA, at 21°C, the cell has a charging capacity to a voltage selected from the group consisting of 1.7, 1.8, 1.9, 2.0, 2.1, and 2.2 V of at least 17 mAh.
59. The alkaline electrochemical cell of any one of clauses 1-46, wherein when charging the cell at 10 mA, at 21°C, the cell has a charging capacity to a voltage selected from the group consisting of 1.7, 1.8, 1.9, 2.0, 2.1, and 2.2 V of at least 14 mAh.
60. The alkaline electrochemical cell of any one of clauses 1-46, wherein when charging the cell at 50 mA, at 21°C, the cell has a charging capacity to a voltage selected from the group consisting of 1.7, 1.8, 1.9, 2.0, 2.1, and 2.2 V of at least 13 mAh.
61. The alkaline electrochemical cell of any one of clauses 1-46, wherein when charging the cell at 100 mA, at 21°C, the cell has a charging capacity to a voltage selected from the group consisting of 1.7, 1.8, 1.9, 2.0, 2.1, and 2.2 V of at least 12 mAh.

## Claims

1. An alkaline electrochemical cell, comprising:
a) a container; and
b) an electrode assembly disposed within the container and comprising a cathode, an anode, a separator located between the cathode and the anode, and an electrolyte shot solution;
wherein the anode comprises 1) solid zinc, 2) anolyte, and 3) solid zinc oxide particles, solid zinc hydroxide particles, zinc oxide dissolved in said anolyte, or zinc hydroxide dissolved in said anolyte; and
wherein the total zinc oxide equivalent weight in the alkaline electrochemical cell's full cell electrolyte solution is at least 3.0 weight percent; and
wherein the separator comprises a bilayer or low-porosity separator, or a laminated separator with a cellophane layer.

2. The alkaline electrochemical cell of claim 1 wherein the bilayer separator comprises a high-density layer and a low-density layer.

3. The alkaline electrochemical cell of claim 2 wherein the low-density layer is placed as a first or a second paper strip with the high-density layer facing the cathode.

4. The alkaline electrochemical cell of claim 1, wherein the bilayer separator has at least one layer comprising pores with a mean diameter that is less than or equal to 0.3, 0.4, 0.5, 0.6, 0.7, 0.8, 0.9, 1.0, 1.1, 1.2, 1.3, 1.4, or 1.5 microns.

5. The alkaline electrochemical cell of claim 1 wherein the surfactant concentration, relative to the anode active material, is between 5 and 50 ppm.

6. The alkaline electrochemical cell of claim 1, wherein the anode comprises sodium silicate or potassium silicate.

7. The alkaline electrochemical cell of claim 1 wherein the ratio of silicon donor to dissolved zinc oxide equivalent, by weight percent, is ≥0.016, ≥0.020, ≥0.025, ≥0.030, ≥0.035, ≥0.040, ≥0.045, ≥0.050, ≥0.055, ≥0.06, ≥0.065, ≥0.07, ≥0.075.

8. The alkaline electrochemical cell of claim 1, wherein the total cell saturation of zinc oxide or zinc hydroxide is at least about 30%.

9. The alkaline electrochemical cell of claim 1, wherein the total cell saturation of zinc oxide or zinc hydroxide is at least about 400%.

10. The alkaline electrochemical cell of claim 1, wherein the separator is a low porosity separator with the mean pore size less than 12 microns and the maximum pore size less than 30 microns.

11. The alkaline electrochemical cell of claim 1 wherein the separator is a laminated separator comprising a non-woven layer and a cellophane layer.

12. The alkaline electrochemical cell of claim 1, wherein the total dissolved zinc oxide weight percent in the full cell electrolyte solution is at least about 0.5 weight percent.

13. The alkaline electrochemical cell of claim 1, wherein the anode comprises solid zinc oxide particles in an amount from about 0.1 to 12 weight percent, based on the total weight of the negative electrode.

14. The alkaline electrochemical cell of claim 1, wherein the silicon donor is present in an amount of at least 0.036 weight percent of the alkaline electrochemical cell's full cell electrolyte solution.

15. The alkaline electrochemical cell of any one of claims 1-14, wherein the full cell molarity of dissolved zinc oxide or zinc hydroxide is from about 0.1 to about 1.5.
